(19) Europäisches Patentamt
European Patent Office
Office européen des brevets

(11) Veröffentlichungsnummer : **0 037 491**
**B1**

(12) **EUROPÄISCHE PATENTSCHRIFT**

(45) Veröffentlichungstag der Patentschrift : **08.02.84**

(51) Int. Cl.³ : **C 09 B 23/10**, D 06 P 1/42, D 21 H 3/80, C 09 B 23/14

(21) Anmeldenummer : **81102065.0**

(22) Anmeldetag : **19.03.81**

# (54) Dimethinfarbstoffe, ihre Herstellung und ihre Verwendung zum Färben von synthetischen und natürlichen Materialien.

(30) Priorität : **01.04.80 DE 3012599**

(43) Veröffentlichungstag der Anmeldung : **14.10.81 Patentblatt 81/41**

(45) Bekanntmachung des Hinweises auf die Patenterteilung : **08.02.84 Patentblatt 84/06**

(84) Benannte Vertragsstaaten : **AT CH DE FR GB IT LI SE**

(56) Entgegenhaltungen :
**FR-A- 2 123 269**
**FR-A- 2 344 673**
**US-A- 4 110 070**

(73) Patentinhaber : **BAYER AG**
**Zentralbereich Patente, Marken und Lizenzen**
**D-5090 Leverkusen 1, Bayerwerk (DE)**

(72) Erfinder : **Beecken, Hermann, Dr.**
**Curiestrasse 1**
**D-5060 Bergisch-Gladbach 2 (DE)**

**EP 0 037 491 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Dimethinfarbstoffe, ihre Herstellung und ihre Verwendung zum Färben von synthetischen und natürlichen Materialien

Gegenstand der vorliegenden Erfindung sind brillante Styrylfarbstoffe der allgemeinen Formel

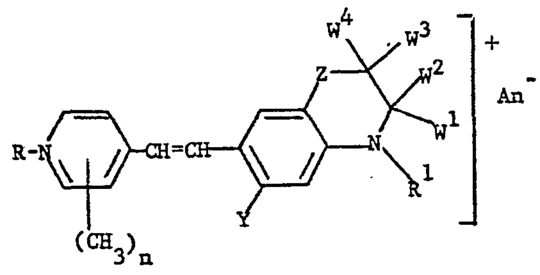

(I)

worin

n für 0, 1 oder 2,

y für Wasserstoff, Methyl, Methoxy, Ethoxy, Trifluormethyl oder Chlor,

R für $C_1$- bis $C_4$-Alkyl, das durch Phenyl oder $C_1$-$C_4$-Alkoxycarbonyl substituiert sein kann, $C_3$- oder $C_4$-Alkenyl, das durch Phenyl substituiert sein kann, für $C_2$- bis $C_4$-Alkyl, das durch ein Hydroxy, $C_1$- bis $C_4$-Alkoxy, Phenoxy, Benzyloxy, Benzoyloxy, Benzamido, Phenylsulfamido, Mesylamino, $C_1$- bis $C_3$-Alkylcarbonyloxy, $C_1$- bis $C_4$-Alkylcarbamoyloxy, Phenylcarbamoyloxy oder Cyan substituiert ist, oder für $C_3$- oder $C_4$-Alkyl, das durch zwei Hydroxy, Methoxy, Ethoxy oder Acetoxy substituiert ist, wobei die Phenylreste ihrerseits durch ein Hydroxy, $C_1$- bis $C_4$-Alkoxy, $C_1$- bis $C_4$-Alkoxycarbonyl, $C_5$- oder $C_6$-Cycloalkyl, Benzyl, 2-Phenylpropyl-(2), Phenoxy, Benzyloxy, Phenylmercapto, Phenylsulfonyl, Nitro, Cyan oder 1 bis 3 Fluor, Chlor, Brom oder $C_1$- bis $C_4$-Alkyl substituiert sein können,

$R^1$ für $C_1$-$C_4$-Alkyl, das durch Phenyl oder $C_1$- bis $C_4$-Alkoxycarbonyl substituiert sein kann, $C_3$- oder $C_4$-Alkenyl, das durch Phenyl substituiert sein kann, für $C_2$- bis $C_4$-Alkyl, das durch ein Hydroxy, $C_1$- bis $C_4$-Alkoxy, Phenoxy, Benzyloxy, Benzoyloxy, Benzamido, Phenylsulfamido, Mesylamino, $C_1$- bis $C_3$-Alkylcarbonyloxy, $C_1$- bis $C_4$-Alkylcarbamoyloxy, Phenylcarbamoyloxy, Chlor oder Cyan substituiert ist, oder für $C_3$- oder $C_4$-Alkyl, das durch zwei Hydroxy, Methoxy, Ethoxy, Acetoxy oder Chlor substituiert ist, wobei die Phenylreste ihrerseits durch ein Hydroxy, $C_1$- bis $C_4$-Alkoxy, $C_1$- bis $C_4$-Alkoxycarbonyl, $C_5$- oder $C_6$-Cycloalkyl, Benzyl, 2-Phenyl-propyl-(2), Phenoxy, Benzyloxy, Phenylmercapto, Phenylsulfonyl, Nitro, Cyan oder 1 bis 3 Fluor, Chlor, Brom oder $C_1$- bis $C_4$-Alkyl substituiert sein können,

$W^1$, $W^2$, $W^3$ und $W^4$ unabhängig voneinander für Wasserstoff oder $C_1$- bis $C_4$-Alkyl,

$W^1$ auch für Phenyl und

$W^3$ auch für Chlor stehen, oder

$W^1$ und $W^3$ gemeinsam die restlichen Glieder eines Cyclohexanringes und

$W^3$ und $W^4$ gemeinsam die restlichen Glieder eines Cyclopentan- oder Cyclohexanringes bilden können,

Z O oder 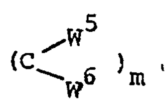 ,

darstellt, wobei

m 0 oder 1 und

$W^5$ und $W^6$ unabhängig voneinander H oder $C_1$- bis $C_4$-Alkyl sind, und

$An^-$ ein für kationische Farbstoffe übliches Anion bedeutet,

sowie deren Herstellung und Verwendung zum Färben natürlicher und synthetischer, kationisch färbbarer Substrate, insbesondere zum Massefärben, Beschreiben und Bedrucken von Papier.

Als Anionen $An^-$ kommen für kationische Farbstoffe übliche anorganische und organische Anionen in Betracht (vgl. z. B. Deutsche Offenlegungsschriften 2 128 326, Seiten 5-7, und 2 520 816, Seiten 4-6). Bevorzugt sind farblose Anionen, die dem betreffenden Farbstoff die für den vorgesehenen Färbevorgang gewünschten Löslichkeitseigenschaften verleihen. Das Anion ist zumeist durch das Herstellungsverfahren und die evtl. vorgenommene Reinigung der kationischen Verbindungen gegeben. Im allgemeinen liegen die Farbstoffe als Halogenide, insbesondere Chloride oder Bromide, als Methosulfate, Ethosulfate, Sulfate, Nitrate, Chlorzinkate, Benzol-, Toluol- oder Naphthalinsulfonate oder als Acetate, Glykolate, Lactate oder dergleichen vor. Diese Anionen können in bekannter Weise gegen andere ausgetauscht werden. Hierzu zählt auch die Möglichkeit der Fällung der Farbstoffkationen mit schwerlöslich machenden — gegebenenfalls auch komplexen (« FANAL-Salze ») — Anionen oder mit Farbstoffanionen.

Wegen ihrer besonders guten färberischen Eigenschaften sind die erfindungsgemäßen Farbstoffe der Formel

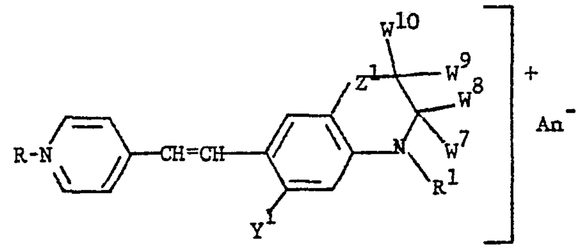

(II)

worin

R, $R^1$ und $An^-$ die oben definierten Bedeutungen besitzen,

$Y^1$ H, $CH_3$, $OCH_3$, $OC_2H_5$ oder Cl,

$Z^1$ $CH_2$, $CHCH_3$ oder eine direkte Bindung und

$W^7$, $W^8$, $W^9$ und $W^{10}$ unabhängig voneinander H, $CH_3$ oder $C_2H_5$ bezeichnen,

von besonderem technischen Interesse. Von diesen Farbstoffen sind wiederum die mit $Z^1 = CH_2$ und $CHCH_3$ hervorzuheben.

Die Herstellung der neuen Farbstoffe erfolgt in an sich bekannter Weise, indem man Quartärsalze der Formel

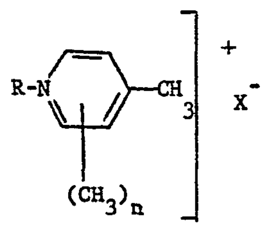

(III)

mit Aldehyden der Formel

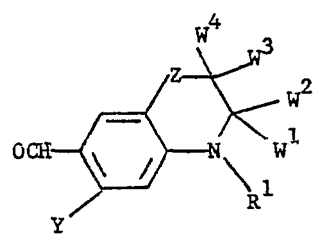

(IV)

oder deren funktionellen Derivaten (Azomethine, Imoniumsalze usw.) kondensiert,

wobei

R, $R^1$, n, Y, Z und $W^1$ bis $W^4$ die vorstehend erläuterten Bedeutungen haben, und

$X^-$ ein Anion darstellt, das von dem $An^-$ des Endfarbstoffes verschieden sein kann.

Die Kondensationen werden bei Temperaturen zwischen 20 und 160 °C, vorzugsweise im Bereich 50-120 °C, in organischen Lösungsmitteln durchgeführt. Als solche eignen sich beispielsweise Alkohole, wie Methanol, Ethanol, die Propanole und Butanole, ferner Benzylalkohol, Essigsäureethylester, Benzoesäuremethylester, Ameisensäure, Essigsäure, $C_2$- bis $C_4$-Glykole und ihre $C_1$- bis $C_4$-Alkylether, Dimethylformamid, Dimethylacetamid, Tetramethylharnstoff, Acetonitril, Benzonitril und andere.

Zu Beschleunigung der Kondensationsreaktion können basische Katalysatoren zugesetzt werden, wie beispielsweise Triethylamin, Pyridin, Piperidin, N-Ethyl-piperidin, N-Methyl-morpholin, Alkalicarbonate, Alkaliacetate und Acetate anorganischer oder organischer Stickstoffbasen, wie z. B. Ammoniumacetat oder Piperidinacetat.

Die Quartärsalze der Formeln III sind aus gegebenenfalls weiter substituierten 4-Methyl-pyridinen durch Umsetzung mit Alkylierungsmitteln R-X auf bekannte Weise und in großer Zahl zugänglich. In vielen Fällen wird zunächst eine Zwischenverbindung hergestellt, wie das N-Hydroxyethyl-picoliniumchlorid, die erst in einer 2. Stufe, beispielsweise durch Umsetzung mit Acylanhydriden, Isocyanaten und dergleichen, das gewünschte Ausgangsprodukt III liefert.

Die Aldehyde der Formel IV sind zum Teil bekannt oder nach geläufigen Methoden zu gewinnen, indem man die entsprechenden aldehydgruppenfreien Verbindungen der Formylierung unterwirft, wozu insbesondere die Reaktionen nach Vilsmeier und Haack oder nach Duff (J. Chem. Soc. (London) *1952,* Seiten 1159-1164, vorteilhaft in der Ausführung gemäß DT-PS 1 206 879) Anwendung finden.

Die erfindungsgemäßen Farbstoffe eignen sich zum Färben, Bedrucken und Massefärben von Materialien, die überwiegend oder vollständig aus Polyacrylnitril oder seinen Mischpolymerisaten mit

anderen Vinylmonomeren, wie Vinylidencyanid, Vinylidenchlorid, Vinylchlorid, Vinylacetat, Vinylalkohol, Acryl- oder Methacrylester, bestehen oder aus sauer modifizierten Polyestern oder Polyamiden. Die erhaltenen brillanten goldgelben bis blaustichig roten Färbungen und Drucke, vor allem auf Polyacrylnitril, zeichnen sich durch gute Allgemeinechtheiten, insbesondere durch sehr gute Naß- und Schweißechtheiten, durch eine vorzügliche Affinität zur Faser und durch eine hohe pH-Stabilität aus.

Die Farbstoffe eignen sich ferner für die übrigen bekannten Anwendungen kationischer Farbstoffe, wie beispielsweise das Färben und Bedrucken von Celluloseacetat, Kokosfasern, Jute, Sisal, Seide und tannierten Baumwolle, Leder und Federn, zur Bereitung von Kugelschreiberpasten, unter anderem durch Fällung mit anionischen Farbstoffen, von Stempelfarben und zur Verwendung im Gummidruck.

Besonders hervorzuheben ist jedoch die ausgezeichnete Eignung der erfindungsgemäßen Farbstoffe zum Färben von geleimten und ungeleimten Papieren in der Masse in Brillanten goldgelben bis blaustichig roten Tönen, wobei besonders hohe Affinitäten zur ligninhaltigen (holzschliffhaltigen) Papiermasse festgestellt werden. Ein Teil der neuen Farbstoffe zeichnet sich darüber hinaus auch durch gute Affinitäten zu ligninfreien Papiermassen (z. B. gebleichtem Sulfitzellstoff) aus, so daß derartige Papiermassen mit wesentlich verringerten Abwasseranfärbung eingefärbt werden können.

Die Farbstoffe besitzen überwiegend gute Löslichkeiten in Wasser und polaren organischen Lösungsmitteln, so daß sie zur Herstellung stabiler, hochkonzentrierter Lösungen geeignet sind.

Als polare organische Lösungsmittel kommen Essigsäure, Glykolsäure, Milchsäure, $C_2$- bis $C_4$-Glykole, Glykolmono- und -dialkylether, Glykolmono- und -diacetate, $C_1$- bis $C_4$-Alkanole, Benzylalkohol und die üblichen für die verschiedenen Anwendungsformen optimalen Solventien oder deren Mischungen in Betracht.

Aus der DE-A-2 060 615 und der FR-A-2 344 673 sind kationische Dimethinfarbstoffe bekannt, die sich von den neuen Farbstoffen in jeweils einem der beiden heterocyclischen Ringe unterscheiden und die u. a. zum Färben von Cellulose bzw. Papier geeignet sind. Es wurde nun gefunden, daß sich die neuen Farbstoffe gegenüber diesen bekannten Farbstoffen durch eine überraschend hohe Affinität zu Papier auszeichnen. Wegen der damit verbundenen geringen Abwasserbelastung bei der Papierherstellung eignen sich die neuen Farbstoffe ausgezeichnet zum Einsatz im technischen Maßstab.

Zur Erläuterung der Erfindung dienen die folgenden Beispiele.

## Beispiel 1

72,4 g 4,N-Dimethyl-pyridinium-methosulfat und 75,3 g N-Benzyl-2-methyl-2,3-dihydroindol-5-aldehyd werden in 300 ml Isopropanol von 80 °C gelöst, 3 ml Piperidin zugesetzt und das Gemisch 8 h auf 80 °C erhitzt. Dabei färbt sich die Lösung tiefrot, und es bildet sich der Farbstoff der Formel

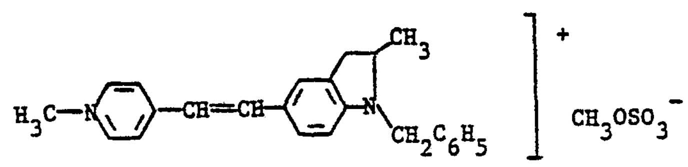

Das Produkt kristallisiert aus, wird einige Zeit nach Abkühlen der Reaktionslösung auf 0-5 °C abgesaugt, mit kaltem Isopropanol gewaschen und schließlich bei 50 °C im Vakuum getrocknet. Einschließlich einer Zweitfraktion aus der eingeengten Mutterlauge beträgt die Ausbeute 123,5 g Farbstoff in Form dunkelroter Kristalle vom Schmelzpunkt 139-145 °C, die durch Umkristallisieren aus viel Isopropanol weiter gereinigt werden können.

$\lambda_{max} = 491$ nm (50 %ig. Essigsäure).

Der erhaltene Farbstoff färbt Polyacrylnitril in brillantem rotem Ton bei gutem Echtheitsniveau der Färbungen. Er eignet sich außerdem zur Herstellung von Stempelfarben und Kugelschreiberpasten sowie für den Gummidruck.

Bei seiner Verwendung zum Färben von holzschliffhaltigen Papiermassen wird eine hohe Affinität zur Faser und nur geringe Abwasseranfärbung festgestellt. Die gefärbten Papiere zeigen gelbstichig rote Nuancen hoher Klarheit.

Der benötigte Aldehyd wird in roher Form als halbfeste Kristallmasse mit 94 % Ausbeute aus N-Benzyl-2-methyl-2,3-dihydroindol nach Vilsmeier erhalten.

## Beispiel 2

a) 57,3 g 4-Methyl-N-β-hydroxyethyl-pyridiniumchlorid und 83,7 g N-Benzyl-2,3,3-trimethyl-2,3-dihydroindol-5-aldehyd werden in 500 ml Isopropanol gelöst, 5 ml Piperidin hinzugefügt und das Gemisch 20 h bei 80 °C gerührt. Nach Abkühlen wird der auskristallisierte Farbstoff der Formel

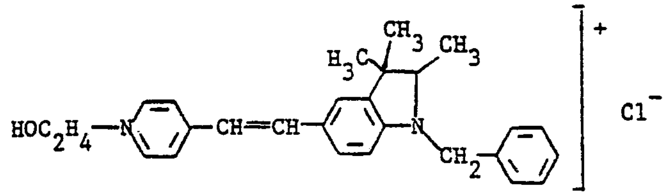

abgesaugt, mit Isopropanol gewaschen und getrocknet. Man erhält 114 g Produkt vom Schmelzpunkt 251-256 °C ($\lambda_{max}$ in 50 %ig. Essigsäure : 490 nm), das sich in gleichen Teilen Eisessig/Milchsäure zu einer 20-30 %igen Flüssigeinstellung auflösen läßt und sich u. a. hervorragend zum Massefärben von ligninhaltigen Papiermassen in klaren rotorange Tönen eignet.

Das zur Farbstoffherstellung eingesetzte 4-Methyl-N-β-hydroxyethylpyridiniumchlorid erhält man folgendermaßen :

Die Lösung von 81 g 2-Chlor-ethanol in 500 ml trockenem Toluol wird bei 100 °C mit 99 g γ-Picolin (96 % Reinheit) versetzt und das Reaktionsgemisch 15 h zum Rückfluß erhitzt (Innentemperatur ca. 112-114 °C). Das auskristallisierte Quartärsalz wird nach Erkalten des Ansatzes abgesaugt, mit trockenem Toluol gewaschen und bei 80 °C im Vakuum getrocknet.

Ausbeute : 140 g vom Schmelzpunkt 96-98 °C.

Das Produkt ist sehr hygroskopisch. Seine Herstellung gelingt auch ohne Solvens bei 80-140 °C.

b) Setzt man anstelle von N-β-Hydroxyethyl- das N-β,γ-Dihydroxypropyl-4-methyl-pyridiniumchlorid ein, so erhält man analog den Farbstoff der Formel

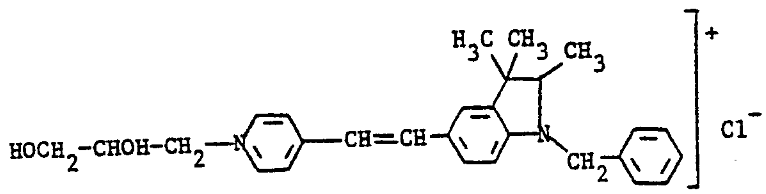

vom Schmelzpunkt 263-267 °C ($\lambda_{max}$ in 50 %ig. Essigsäure : 492-493 nm), der sich bei ähnlich geringer Abwasseranfärbung ebenfalls sehr gut zum Massefärben, insbesondere von holzschliffhaltigen Papiermassen einsetzen läßt und ihnen einen gelbstichig roten Ton verleiht.

Beispiel 3

a) 75,3 g N-Benzyl-1,2,3,4-tetrahydrochinolin-6-aldehyd und 72,4 g N,4-Dimethyl-pyridinium-methosulfat werden in 300 ml Isopropanol nach Zusatz von 0,5 g Piperidin 24 h bei 80 °C gerührt. Der Farbstoff der Formel

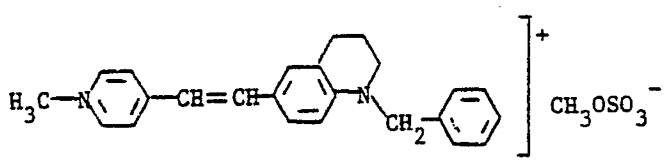

kristallisiert aus und wird nach Erkalten des Ansatzes in üblicher Weise isoliert. Man erhält 100,1 g Produkt vom Schmelzpunkt 171-178 °C ($\lambda_{max}$ = 492 nm/50 %ig. Essigsäure), das eine hohe Affinität zu holzschliffhaltigem Papier besitzt und dieses in der Masse in klaren gelbstichig roten Tönen anfärbt.

b) Ausgehend von dem gleichen Aldehyd und N-β-Hydroxyethyl-4-methyl-pyridiniumchlorid erhält man analog den Farbstoff der Formel

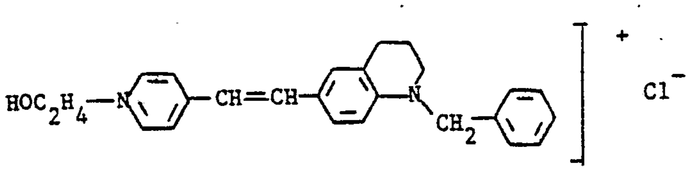

vom Schmelzpunkt 242-248 °C und $\lambda_{max}$ = 498 nm (50 %ig. Essigsäure) mit ähnlich guten färberischen Eigenschaften für Papiermassen (rot).

c) Setzt man das N-β,γ-Dihydroxypropyl-4-methyl-pyridiniumchlorid ein, so entsteht der Farbstoff der Formel

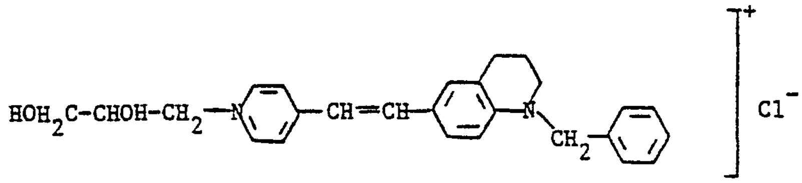

vom Schmelzpunkt 235-241 °C und $\lambda_{max}$ = 502 nm (50 %ig. Essigsäure), der insbesondere holzschliffhaltige Papiermassen bei ausgezeichneter Affinität in klaren roten Tönen anfärbt.

Beispiel 4

Aus 60,3 g N-Allyl-1,2,3,4-tetrahydrochinolin-6-aldehyd und 72,4 g N,4-Dimethyl-pyridiniummethosulfat in 300 g Isopropanol werden analog Beispiel 1 88,5 g kristallisierter Farbstoff der Formel

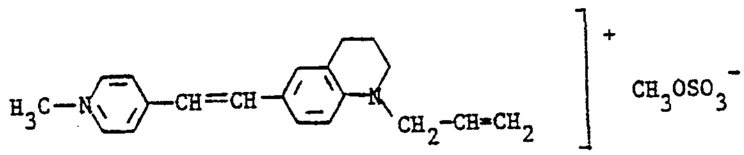

gewonnen (Schmelzpunkt 168-170 °C ; $\lambda_{max}$ = 495 nm/50 %ig. Essigsäure). Das Produkt färbt holzschliffhaltige Papiermassen bei hoher Affinität in klaren orangeroten Tönen an.

Beispiel 5

13,8 g N-Ethyl-2,2,4-trimethyl-1,2,3,4-tetrahydrochinolin-6-aldehyd und 11,5 g N-β-Hydroxyethyl-4-methyl-pyridiniumchlorid ergeben in 60 ml Isopropanol unter Zusatz von 0,3 ml Piperidin analog Beispiel 1 den Farbstoff der Formel :

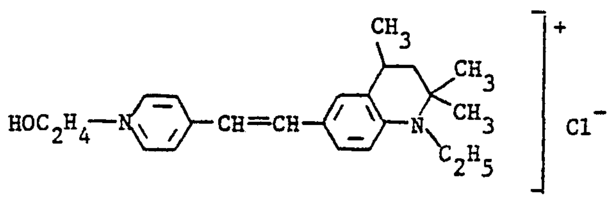

Das Produkt schmilzt bei 240-243 °C ($\lambda_{max}$ = 510 nm/50 %ig. Essigsäure) und kann ohne Schwierigkeit zu einer hochkonzentrierten Flüssigeinstellung aufgelöst werden (z. B. in $H_2O$, verdünnter Essigsäure, $H_2O$/Glykol-Gemischen usw.), die sich ausgezeichnet zum Färben von Papiermassen, insbesondere holzschliffhaltigen, eignet und diese bei hervorragender Affinität in sehr klaren blaustichig roten Tönen anfärbt.

Beispiel 6

Setzt man als Aldehyd 17,6 g N-Benzyl-2,2,4-trimethyl-1,2,3,4-tetrahydrochinolin-6-aldehyd ein und verfährt im übrigen wie in Beispiel 5, so erhält man den Farbstoff der Formel

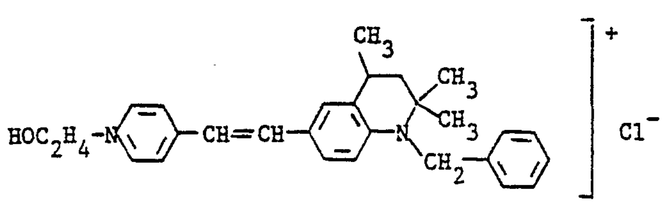

in kristalliner Form (Schmelzpunkt 248-251 °C ; $\lambda_{max}$ = 496 nm/50 %ig. Essigsäure). Das Produkt eignet sich besonders zum Färben von Papier in der Masse, wobei äußerst brillante rotorange Töne erzielt werden.

Beispiel 7

Werden in Abweichung von Beispiel 5 als Aldehyd 17,3 g N-β-Acetoxyethyl-2,2,4-trimethyl-1,2,3,4-tetrahydrochinolin-6-aldehyd eingesetzt, so isoliert man den Farbstoff der Formel

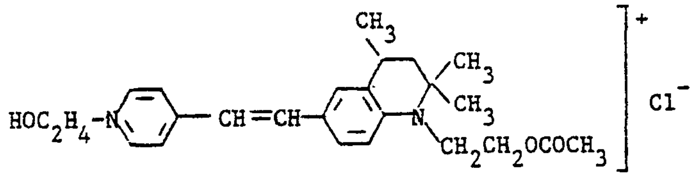

vom Schmelzpunkt 215-219 °C ($\lambda_{max}$ = 488 nm/50 %ig. Essigsäure). Das Produkt eignet sich hervorragend zum Färben ligninhaltiger Papiermassen in sehr klaren rotstichig orange Tönen.

Beispiel 8

Bei Verwendung von 15,9 g N-β-Chlorethyl-2,2,4-trimethyl-1,2,3,4-tetrahydrochinolin-6-aldehyd anstelle des in Beispiel 5 eingesetzten Aldehyds erhält man den Farbstoff der Formel

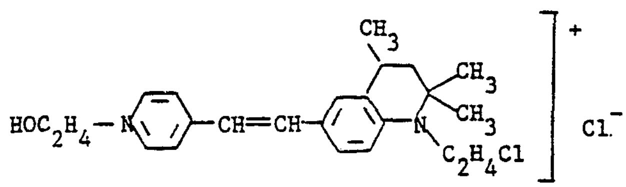

Dieser schmilzt bei 248-252 °C ($\lambda_{max}$ = 484 nm/50 %ig. Essigsäure) und verleiht insbesondere ligninhaltigen Papieren, in der Masse gefärbt, rotorange Töne von hervorragender Brillanz.

Den verwendeten Aldehyd stellt man wie folgt dar :

Zu 87,5 g N-β-Hydroxyethyl-2,2,4-trimethyl-1,2,3,4-tetrahydrochinolin werden unter Rühren bei 60 °C bis maximal 80 °C langsam 61,4 g Phosphoroxychlorid getropft. Man rührt bis zur vollständigen Umsetzung ca. 3 h bei 80 °C nach, gibt anschließend 160 ml Dimethylformamid hinzu und hält 10 h bei 70-80 °C, bis die Formylierung beendet ist (Dünnschichtchromatographie an Silikagel-Schichten im Fließmittel Toluol/Chloroform 1 : 1 v/v). Man trägt die Reaktionsschmelze auf 400 g Eis aus, stellt mit konz. wäßrigem Ammoniak auf pH 9 und isoliert den auskristallisierten Aldehyd auf übliche Weise. Ausbeute : 102,8 g vom Schmelzpunkt 70-75 °C (roh).

Entsprechend wurden die Ausgangsverbindungen der übrigen Beispiele gewonnen.

Durch Einsatz entsprechender Ausgangsmaterialien erhält man analog zu den vorstehenden Beispielen weitere erfindungsgemäße Farbstoffe der Formel

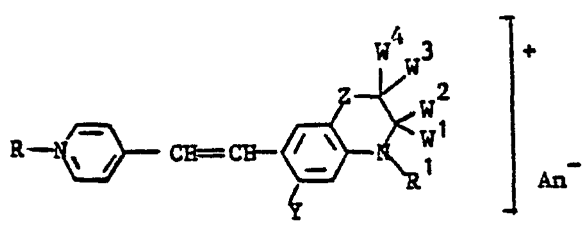

mit vergleichbaren coloristischen Eigenschaften beim Färben der oben genannten Materialien, insbesondere von Polyacrylnitril, sauer modifizierten Polyestern und Polyamiden und vorzugsweise von geleimten und ungeleimten Papierstoffen in der Masse, wobei die Abwässer nur geringe Färbungen aufweisen. Eine Auswahl ist einschließlich Farbton des in der Masse gefärbten Papiers in den folgenden Tabellen zusammengestellt.

| Beispiel Nr. | R | $R^1$ | Y | $W^1$ | $W^2$ | $W^3$ | $W^4$ | Z | Farbton des Papiers bei Massefärbungen |
|---|---|---|---|---|---|---|---|---|---|
| 9 | $HOC_2H_4$ | $CH_2C_6H_5$ | H | H | $CH_3$ | H | H | -*) | gelbst. rot |
| 10 | $CH_3$ | $C_4H_9$ | " | " | " | " | " | " | rot |
| 11 | $HOC_2H_4$ | " | " | " | " | " | " | " | rot |

(Tabelle, Fortsetzung)

| Beisp. Nr. | R | $R^1$ | Y | $W^1$ | $W^2$ | $W^3$ | $W^4$ | Z | Farbton des Papiers bei Massefärbungen |
|---|---|---|---|---|---|---|---|---|---|
| 12 | $CH_3$ | $CH_2C_6H_5$ | " | " | $CH_3$ | $CH_3$ | $CH_3$ | " | gelbst. rot |
| 13 | $HOC_2H_4$ | $CH_2CH=CH_2$ | " | " | H | H | H | $CH_2$ | rot |
| 14 | $C_6H_5CH_2$ | $CH_3$ | " | $CH_3$ | $CH_3$ | " | " | $CHCH_3$ | blaust. rot |
| 15 | $C_2H_5$ | " | " | " | " | " | " | " | rot |
| 16 | $CH_3$ | " | " | " | " | " | " | " | rot |
| 17 | $HOC_2H_4$ | " | " | " | " | " | " | " | rot |
| 18 | $CH_2CH_2C_6H_5$ | " | " | " | " | " | " | " | rot |
| 19 | $CH_2CH_2OC_6H_5$ | " | " | " | " | " | " | " | rot |
| 20 | $CH_2CH_2OCOC_6H_5$ | $CH_3$ | H | $CH_3$ | $CH_3$ | H | H | $CHCH_3$ | rot |
| 21 | $CH_3$ | $C_2H_5$ | H | " | " | " | " | " | blaust. rot |
| 22 | $C_2H_5$ | " | " | " | " | " | " | " | blaust. rot |
| 23 | $C_6H_5CH_2$ | " | " | " | " | " | " | " | rotst. violett |
| 24 | $HOC_2H_4$ | " | " | " | " | " | " | " | blaust. rot |
| 25 | " | " | $CH_3$ | " | " | " | " | " | " " |
| 26 | $CH_3$ | $C_2H_4Cl$ | " | " | " | " | " | " | " " |
| 27 | $C_2H_5$ | " | " | " | " | " | " | " | rotorange |
| 28 | $HOC_2H_4$ | " | $CH_3$ | " | " | " | " | " | rotst. orange |
| 29 | " | " | $OCH_3$ | " | " | " | " | " | rotorange |
| 30 | $CH_3COOC_2H_4$ | " | H | " | " | " | " | " | gelbst. rot |
| 31 | $HOCH_2CHOHCH_2$ | " | " | " | " | " | " | " | " " |
| 32 | $CH_3$ | $C_2H_4OCOCH_3$ | " | " | " | " | " | " | rotst. orange |
| 33 | $C_2H_5$ | $C_2H_4OCOCH_3$ | H | $CH_3$ | $CH_3$ | H | H | $CHCH_3$ | orange |
| 34 | $HOC_2H_4$ | " | $CH_3$ | " | " | " | " | " | " |
| 35 | " | $C_2H_4OH$ | " | " | " | " | " | " | gelbst. rot |
| 36 | " | $C_3H_7$ | " | " | " | " | " | " | blaust. rot |
| 37 | " | " | $CH_3$ | " | " | " | " | " | " " |
| 38 | " | " | $OC_2H_5$ | " | " | " | " | " | rot |
| 39 | " | " | Cl | " | " | " | " | " | " |

(Tabelle, Fortsetzung)

| Beisp. Nr. | R | $R^1$ | Y | $W^1$ | $W^2$ | $W^3$ | $W^4$ | Z | Farbton des Papiers bei Massefärbungen |
|---|---|---|---|---|---|---|---|---|---|
| 40 | $CH_3COOC_2H_4$ | " | H | " | " | " | " | " | blaust. rot |
| 41 | $HOC_2H_4$ | $C_4H_9$ | " | " | " | " | " | " | " " |
| 42 | " | " | $CH_3$ | " | " | " | " | " | " " |
| 43 | $CH_3$ | " | H | " | " | " | " | " | rot |
| 44 | $HOCH_2CHOHCH_2$ | " | " | " | " | " | " | " | blaust. rot |
| 45 | $CH_3$ | $CH_2C_6H_5$ | " | " | " | " | " | " | orangerot |
| 46 | $C_2H_5$ | " | " | " | " | " | " | " | " |
| 47 | $HOCH_2CHOHCH_2$ | " | " | " | " | " | " | " | " |
| 48 | $CH_3COOCH_2CHOHCH_2$ | $CH_2C_6H_5$ | H | $CH_3$ | $CH_3$ | H | H | $CHCH_3$ | rot |
| 49 | $CH_3COOCH_2$ / $CH_3COOCH$ / $CH_2$ | " | " | " | " | " | " | " | blaust. rot |
| 50 | $CH_3COOC_2H_4$ | " | " | " | " | " | " | " | rotorange |
| 51 | $HOC_2H_4$ | $C_2H_4OCH_2C_6H_5$ | " | " | " | " | " | " | rotst. orange |
| 52 | " | $C_2H_4OCONHCH_3$ | " | " | " | " | " | " | " " |
| 53 | " | $C_2H_4OCONHC_6H_5$ | " | " | " | " | " | " | " " |
| 54 | " | $C_2H_4OC_6H_4CH_3$(p) | " | " | " | " | " | " | " " |
| 55 | " | $C_2H_4Cl$ | $CH_3$ | H | " | " | " | O | orange |
| 56 | $CH_3$ | $C_2H_4CO_2CH_3$ | H | $CH_3$ | " | " | " | $CHCH_3$ | " |
| 57 | $C_2H_5$ | $C_2H_4CN$ | " | " | " | " | " | " | " |

*) direkte Bindung

Beispiel 58

In ein wäßriges Färbebad, das pro 1 000 ml 0,75 g 30 %ige Essigsäure, 0,38 g Natriumacetat und 0,15 g des in Beispiel 3 beschriebenen Farbstoffes enthält, bringt man bei 40 °C die dem Flottenverhältnis 1 : 40 entsprechende Menge Polyacrylnitrilfaser ein, erhitzt innerhalb von 20-30 min zum Sieden und färbt 30-60 min bei Siedetemperatur. Das anschließend gespülte und getrocknete Färbegut weist eine brillante gelbstichig rote Färbung auf, die sich allgemein durch gute Echtheiten, insbesondere durch sehr gute Wasch- und Dekaturechtheit auszeichnet.

Färbt man mit dem gleichen Farbstoff unter den Bedingungen des sogenannten NEOCHROM-Prozesses naßgesponnene Polyacrylnitrilfasern, so erhält man ebenfalls Färbungen von vergleichbar hohem Echtheitsniveau.

Beispiel 59

Eine aus 15 g des Farbstoffes gemäß Beispiel 4, 15 g Polyacrylnitril und 70 g Dimethylformamid bereitete Stammlösung wird einer üblichen Spinnlösung von Polyacrylnitril in der gewünschten Menge

zugesetzt und die gefärbte Lösung in bekannter Weise versponnen. Es resultieren Polyacrylnitrilfäden von klarer orangeroter Färbung, die gute Echtheitseigenschaften aufweisen, insbesondere sehr gute Wasch- und Dekaturechtheiten.

Beispiel 60

Ein Gewebe aus Polyacrylnitril wird mit einer Druckpaste der folgenden Zusammensetzung bedruckt :

30 g des in Beispiel 6 beschriebenen Farbstoffes,
50 g Thiodiethylenglykol,
30 g Cyclohexanol,
30 g 30 %ige Essigsäure,
500 g Kristallgummi,
30 g wäßrige Zinknitratlösung (d = 1,5 $gcm^{-3}$) und
330 g Wasser.

Der erhaltene brillante, rotorange Druck wird getrocknet, 30 min gedämpft und anschließend gespült. Er zeichnet sich durch gute Echtheitseigenschaften aus.

Beispiel 61

Sauer modifizierte Polyglykolterephthalatfasern (z. B. solche, die in der belgischen Patentschrift 594 179 und in der USA-Patentschrift 2 893 816 beschrieben sind) werden bei 20 °C und einem Flottenverhältnis 1 : 40 in ein Färbebad gegeben, das pro 1 000 ml 3-10 g Natriumsulfat, 0,1-2 g Oleylpolyglykolether (enth. 50 mol Ethylenoxid), 0-15 g Dimethylbenzyl-dodecylammoniumchlorid und 0,3 g Farbstoff gemäß Beispiel 27 enthält und mit Essigsäure bzw. Natriumacetat auf einen pH-Wert von 4,5-5,5 eingestellt wurde. Man erhitzt innerhalb von 30 min auf 98 °C und hält das Bad 60 min bei dieser Temperatur. Nach dem anschließenden Spülen und Trocknen der Fasern weisen diese eine brillante rotorange Färbung mit guten Echtheitseigenschaften auf.

Beispiel 62

In einem Färbebecher von 500 ml Inhalt, der sich in einem beheizten Wasserbad befindet, werden 0,15 g des Farbstoffes gemäß Beispiel 22 nach Zusatz von 0,5 g Oleylpolyglykolether (enth. 50 mol Ethylenoxid) mit Wasser auf 500 ml aufgefüllt und der pH-Wert der Färbeflotte auf 4,5-5 eingestellt. In dieser Flotte werden 10 g Stückware aus sauer modifiziertem Polyamid ständig bewegt, während die Badtemperatur binnen 15 min auf 100 °C erhöht wird. Nach 15-20 minütigem Färben bei Kochtemperatur wird das gefärbte Gut gespült und getrocknet, z. B. durch Bügeln oder bei 60-70 °C im Trockenschrank. Man erhält eine klare, blaustichig rote Färbung mit guten Echtheitseigenschaften.

Beispiel 63

Ein aus 60 % Holzschliff und 40 % ungebleichtem Sulfitzellstoff bestehender Trockenstoff wird im Holländer mit soviel Wasser angeschlagen und bis zum Mahlgrad 40° SR gemahlen, daß der Trockengehalt etwas über 2,5 % liegt, und anschließend mit Wasser auf exakt 2,5 % Trockengehalt des Dickstoffes eingestellt.

200 g dieses Dickstoffes werden mit 5 g einer 0,25 %igen wäßrigen Lösung des Farbstoffes gemäß Beispiel 41 versetzt, ca. 5 min verrührt, 2 % Harzleim und 4 % Alaun, bezogen auf Trockenstoff, hinzugegeben und wiederum einige Minuten homogen verrührt. Man verdünnt die Masse mit ca. 500 g Wasser auf 700 ml und stellt hieraus in bekannter Weise durch Absaugen über einen Blattbildner Papierblätter her. Sie weisen eine brillante blaustichig rote Färbung auf. Im Abwasser des Blattbildners ermittelt man photometrisch (bei $\lambda_{max}$ = 507 nm) die Menge des nicht an Papier gebundenen Farbstoffes zu ca. 2 %. Beim Färben ungeleimter Papiermassen werden bei sonst gleicher Verfahrensweise ca. 3 % nicht fixierten Farbstoffes festgestellt.

Ähnlich geringe Abwasseranfärbungen zeigen unter obigen Arbeitsbedingungen praktisch alle erfindungsgemäßen Farbstoffe.

Beispiel 64

200 g eines analog Beispiel 63, jedoch ausschließlich unter Verwendung von gebleichtem Sulfitzellstoff bereiteten 2,5 %igen Dickstoffes (Mahlgrad 35° SR) werden mit 5 g einer 0,5 %igen wäßrigen Lösung des Farbstoffes von Beispiel 23 versetzt und unter Zusatz von Harzleim und Alaun zu Papier verarbeitet. Man erhält ein in kräftigem, rotstichig violettem Ton eingefärbtes Blattpapier. Das Abwasser enthält lt. photometrischer Bestimmung nur ca. 15 % des eingesetzten Farbstoffes.

**Ansprüche**

1. Styrylfarbstoffe der allgemeinen Formel

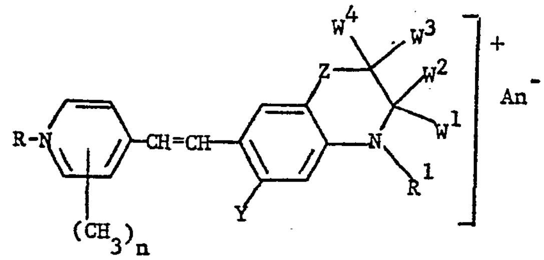

worin

n für 0, 1 oder 2,

Y für Wasserstoff, Methyl, Methoxy, Ethoxy, Trifluormethyl oder Chlor,

R für $C_1$- bis $C_4$-Alkyl, das durch Phenyl oder $C_1$- bis $C_4$-Alkoxycarbonyl substituiert sein kann, $C_3$- oder $C_4$-Alkenyl, das durch Phenyl substituiert sein kann, für $C_2$- bis $C_4$-alkyl, das durch ein Hydroxy, $C_1$- bis $C_4$-Alkoxy, Phenoxy, Benzyloxy, Benzoyloxy, Benzamido, Phenylsulfamido, Mesylamino, $C_1$- bis $C_3$-Alkylcarbonyloxy, $C_1$- bis $C_4$-Alkylcarbamoyloxy, Phenylcarbamoyloxy oder Cyan substituiert ist, oder für $C_3$- oder $C_4$-Alkyl, das durch zwei Hydroxy, Methoxy, Ethoxy oder Acetoxy substituiert ist, wobei die Phenylreste ihrerseits durch ein Hydroxy, $C_1$- bis $C_4$-Alkoxy, $C_1$- bis $C_4$-Alkoxycarbonyl, $C_5$- oder $C_6$-Cycloalkyl, Benzyl, 2-Phenyl-propyl-(2), Phenoxy, Benzyloxy, Phenylmercapto, Phenylsulfonyl, Nitro, Cyan oder 1 bis 3 Fluor, Chlor, Brom oder $C_1$- bis $C_4$-Alkyl substituiert sein können,

$R^1$ für $C_1$- bis $C_4$-Alkyl, das durch Phenyl oder $C_1$- bis $C_4$-Alkoxycarbonyl substituiert sein kann, $C_3$- oder $C_4$-Alkenyl, das durch Phenyl substituiert sein kann, für $C_2$- bis $C_4$-Alkyl, das durch ein Hydroxy, $C_1$- bis $C_4$-Alkoxy, Phenoxy, Benzyloxy, Benzoyloxy, Benzamido, Phenylsulfamido, Mesylamino, $C_1$- bis $C_3$-Alkylcarbonyloxy, $C_1$- bis $C_4$-Alkylcarbamoyloxy, Phenylcarbamoyloxy, Chlor oder Cyan substituiert ist, oder für $C_3$- oder $C_4$-Alkyl, das durch zwei Hydroxy, Methoxy, Ethoxy, Acetoxy oder Chlor substituiert ist, wobei die Phenylreste ihrerseits durch ein Hydroxy, $C_1$- bis $C_4$-Alkoxy, $C_1$- bis $C_4$-Alkoxycarbonyl, $C_5$- oder $C_6$-Cycloalkyl, Benzyl, 2-Phenyl-propyl-(2), Phenoxy, Benzyloxy, Phenylmercapto, Phenylsulfonyl, Nitro, Cyan oder 1 bis 3 Fluor, Chlor, Brom oder $C_1$- bis $C_4$-Alkyl substituiert sein können,

$W^1$, $W^2$, $W^3$ und $W^4$ unabhängig voneinander für Wasserstoff oder $C_1$- bis $C_4$-Alkyl,

$W^1$ auch für Phenyl und

$W^3$ auch für Chlor stehen, oder

$W^1$ und $W^3$ gemeinsam die restlichen Glieder eines Cyclohexanringes und

$W^3$ und $W^4$ gemeinsam die restlichen Glieder eines Cyclopentan- oder Cyclohexanringes bilden können,

Z O oder, 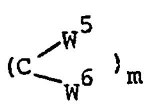

darstellt, wobei

m 0 oder 1 und

$W^5$ und $W^6$ unabhängig voneinander H oder $C_1$- bis $C_4$-Alkyl sind, und

$An^-$ ein für kationische Farbstoffe übliches Anion bedeutet.

2. Farbstoffe gemäß Anspruch 1 der allgemeinen Formel

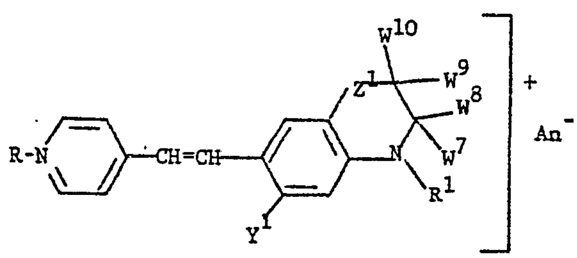

worin

R, $R^1$ und $An^-$ die Bedeutung des Anspruchs 1 besitzen,

$Y^1$ H, $CH_3$, $OCH_3$, $OC_2H_5$ oder Cl,

$Z^1$ $CH_2$, $CHCH_3$ oder eine direkte Bindung und

$W^7$, $W^8$, $W^9$ und $W^{10}$ unabhängig voneinander H, $CH_3$ oder $C_2H_5$ bezeichnen.

3. Farbstoffe der Formel des Anspruchs 2, worin $Z^1$ für $CH_2$ oder $CHCH_3$ steht.

4. Verfahren zur Herstellung von Farbstoffen gemäß Anspruch 1, dadurch gekennzeichnet, daß man Quartärsalze der Formel

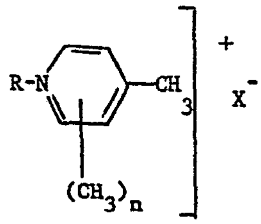

worin

R und n die Bedeutung des Anspruchs 1 haben und

$X^-$ ein Anion darstellt, das von dem $An^-$ des Endfarbstoffes verschieden sein kann,

mit Aldehyden der Formel

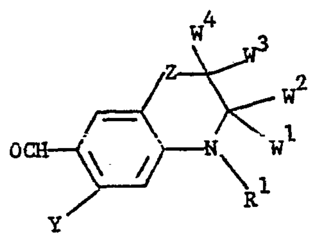

worin

$R^1$, Y, Z und $W^1$-$W^4$ die Bedeutung des Anspruchs 1 haben,

oder deren funktionellen Derivaten kondensiert.

5. Verfahren nach Anspruch 4, dadurch gekennzeichnet, daß man die Kondensation in einem organischen Lösungsmittel bei Temperaturen zwischen 20 und 140 °C durchführt.

6. Verfahren gemäß Anspruch 5, dadurch gekennzeichnet, daß man die Kondensation in Gegenwart eines basischen Katalysators durchführt.

7. Verwendung der Verbindungen gemäß Ansprüchen 1 bis 3 zum Färben, Bedrucken und Massefärben von Polyacrylnitril, sauer modifizierten Polyestern und Polyamiden, Celluloseacetat, Kokosfasern, Jute, Sisal, Seide, tannierter Baumwolle, Leder, geleimten und ungeleimten Papieren sowie zur Bereitung von Kugelschreiberpasten und von Stempelfarben und im Gummidruck.

**Claims**

1. Styryl dyestuffs of the general formula

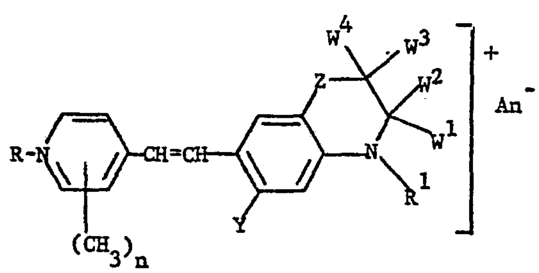

wherein

n represents 0, 1 or 2,

Y represents hydrogen, methyl, methoxy, ethoxy, trifluoromethyl or chlorine,

R represents $C_1$- to $C_4$-alkyl, which can be substituted by phenyl or $C_1$- to $C_4$-alkoxycarbonyl, $C_3$- or $C_4$-alkenyl, which can be substituted by phenyl, $C_2$- to $C_4$-alkyl, which is substituted by one hydroxyl, $C_1$- to $C_4$-alkoxy, phenoxy, benzyloxy, benzoyloxy, benzamido, phenylsulphamido, mesylamino, $C_1$- to $C_3$-alkylcarbonyloxy, $C_1$- to $C_4$-alkylcarbamoyloxy, phenylcarbamoyloxy or cyano radical, or $C_3$- or $C_4$-alkyl, which is substituted by two hydroxyl, methoxy, ethoxy or acetoxy radicals, it being possible for the phenyl radicals in turn to be substituted by one hydroxyl, $C_1$- to $C_4$-alkoxy, $C_1$- to $C_4$-alkoxycarbonyl, $C_5$- or $C_6$-cycloalkyl, benzyl, 2-phenyl-prop-2-yl, phenoxy, benzyloxy, phenylmercapto, phenylsulphonyl, nitro or

cyano radical or by 1 to 3 fluorine, chlorine, bromine or $C_1$- to $C_4$-alkyl radicals,

$R^1$ represents $C_1$- to $C_4$-alkyl, which can be substituted by phenyl or $C_1$- to $C_4$-alkoxycarbonyl, $C_3$- or $C_4$-alkenyl, which can be substituted by phenyl, $C_2$- to $C_4$-alkyl, which is substituted by one hydroxyl, $C_1$- to $C_4$-alkoxy, phenoxy, benzyloxy, benzoyloxy, benzamido, phenylsulphamido, mesylamino, $C_1$- to $C_3$-alkylcarbonyloxy, $C_1$- to $C_4$-alkylcarbamoyloxy phenylcarbamoyloxy, chlorine or cyano radical, or $C_3$- or $C_4$-alkyl, which is substituted by two hydroxyl, methoxy, ethoxy, acetoxy or chlorine radicals, it being possible for the phenyl radicals in turn to be substituted by one hydroxyl, $C_1$- to $C_4$-alkoxy, $C_1$- to $C_4$-alkoxycarbonyl, $C_5$- or $C_6$-cycloalkyl, benzyl, 2-phenyl-prop-2-yl, phenoxy, benzyloxy, phenylmercapto, phenylsulphonyl, nitro or cyano radical or by 1 to 3 fluorine, chlorine, bromine or $C_1$- to $C_4$-alkyl radicals,

$W^1$, $W^2$, $W^3$ and $W^4$ independently of one another represent hydrogen or $C_1$- to $C_4$-alkyl,

$W^1$ also represents phenyl and

$W^3$ also represents chlorine, or

$W^1$ and $W^3$ together can form the remaining members of a cyclohexane ring and

$W^3$ and $W^4$ together can form the remaining members of a cyclopentane or cyclohexane ring,

Z represents O or 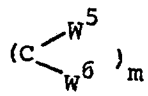

wherein

m is 0 or 1 and

$W^5$ and $W^6$ independently of one another are H or $C_1$- to $C_4$-alkyl, and

$An^-$ denotes an anion which is customary for cationic dyestuffs.

2. Dyestuffs according to Claim 1 of the general formula

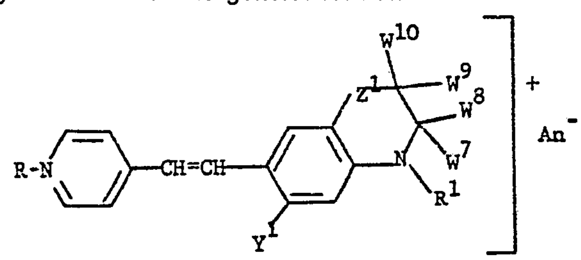

wherein

R, $R^1$ and $An^-$ have the meaning given in Claim 1,

$Y^1$ denotes H, $CH_3$, $OCH_3$, $OC_2H_5$ or Cl,

$Z^1$ denotes $CH_2$, $CHCH_3$ or a direct bond and

$W^7$, $W^8$, $W^9$ and $W^{10}$ independently of one another denote H, $CH_3$ or $C_2H_5$.

3. Dyestuffs of the formula given in Claim 2, wherein $Z^1$ represents $CH_2$ or $CHCH_3$.

4. Process for the preparation of dyestuffs according to Claim 1, characterised in that quaternary salts of the formula

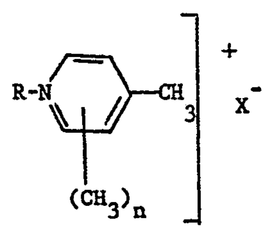

wherein

R and n have the meaning given in Claim 1 and

$X^-$ represents an anion which can be different from the

$An^-$ in the end dyestuff,

are subjected to a condensation reaction with aldehydes of the formula

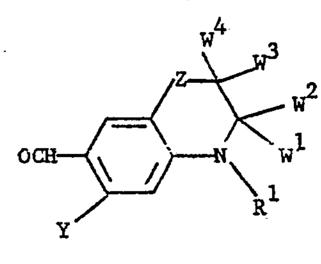

wherein

$R^1$, Y, Z and $W^1$-$W^4$ have the meaning given in Claim 1, or functional derivatives thereof.

5. Process according to Claim 4, characterised in that the condensation reaction is carried out in an organic solvent at temperatures between 20 and 140 °C.

6. Process according to Claim 5, characterised in that the condensation reaction is carried out in the presence of a basic catalyst.

7. Use of the compounds according to Claims 1 to 3 for dyeing, printing and beater-drying polyacrylonitrile, acid-modified polyesters and polyamides, cellulose acetate, coir fibres, jute, sisal, silk, tannin-treated cotton, leather and sized an unsized paper, and for the preparation of ball-point pen pastes and rubber-stamp inks and in flexo-graphic printing.

**Revendications**

1. Colorants de styryle de formule générale

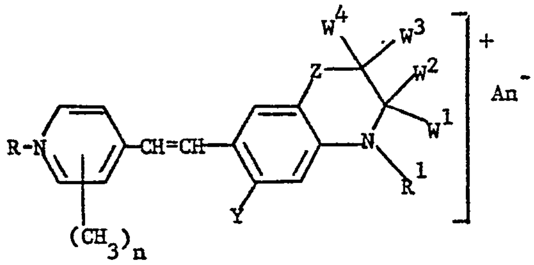

dans laquelle

n est égal à 0, 1 ou 2,

Y représente l'hydrogène ou le chlore ou un groupe méthyle, méthoxy, éthoxy ou trifluorométhyle,

R représente un groupe alkyle en $C_1$-$C_4$, qui peut être substitué par phényle ou (alcoxy en $C_1$-$C_4$)-carbonyle, alcényle en $C_3$ ou $C_4$, qui peut être substitué par phényle, alkyle en $C_2$-$C_4$, qui est substitué par un groupe hydroxy, alcoxy en $C_1$-$C_4$, phénoxy, benzyloxy, benzoyloxy, benzamido, phénylsulfamido, mésylamino, (alkyl en $C_1$-$C_3$)-carbonyloxy, (alkyl en $C_1$-$C_4$)-carbamoyloxy, phénylcarbamoyloxy ou cyano, ou un groupe alkyle en $C_3$ ou $C_4$ qui est substitué par deux groupes hydroxy, méthoxy, éthoxy ou acétoxy, les restes phényle pouvant à leur tour être substitués par un groupe hydroxy, alcoxy en $C_1$-$C_4$, (alcoxy en $C_1$-$C_4$)carbonyle, cycloalkyle en $C_5$ ou $C_6$, benzyle, 2-phénylpropyle-2, phénoxy, benzyloxy, phénylmercapto, phénylsulfonyle, nitro, cyano ou 1 à 3 atomes de fluor, chlore ou brome ou groupes alkyle en $C_1$-$C_4$,

$R^1$ représente un groupe alkyle en $C_1$-$C_4$ qui peut être substitué par phényle ou (alcoxy en $C_1$-$C_4$)-carbonyle, alcényle en $C_3$ ou $C_4$ qui peut être substitué par phényle, alkyle en $C_2$-$C_4$ qui est substitué par un atome de chlore ou groupe hydroxy, alcoxy en $C_1$-$C_4$, phénoxy, benzyloxy, benzoyloxy, benzamido, phénylsulfamido, mésylamino, (alkyl en $C_1$-$C_3$)carbonyloxy, (alkyl en $C_1$-$C_4$)carbamoyloxy, phénylcarbamoyloxy ou cyano, ou un reste alkyle en $C_3$ ou $C_4$ qui est substitué par deux atomes de chlore ou groupes hydroxy, méthoxy, éthoxy, acétoxy, les restes phényle pouvant à leur tour être substitués par un groupe hydroxy, alcoxy en $C_1$-$C_4$, (alcoxy en $C_1$-$C_4$)carbonyle, cycloalkyle en $C_5$-$C_6$, benzyle, 2-phényl-propyle-2, phénoxy, benzyloxy, phénylmercapto, phénylsulfonyle, nitro, ou cyano, ou 1 à 3 atomes de fluor, chlore ou brome, ou groupes alkyle en $C_1$-$C_4$,

$W^1$, $W^2$, $W^3$ et $W^4$ représentent indépendamment l'un de l'autre un atome d'hydrogène ou un alkyle en $C_1$-$C_4$,

$W^1$ représente aussi un groupe phényle et

$W^3$ représente aussi un atome de chlore, ou bien

$W^1$ et $W^3$ pris ensemble peuvent aussi former les chaînons restants d'un noyau cyclohexane, et

$W^3$ et $W^4$ pris ensemble peuvent représenter les chaînons restants d'un noyau cyclopentane ou cyclohexane,

Z représente O ou 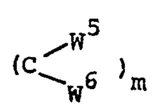

m est égal à 0 ou 1 et

$W^5$ et $W^6$ représentent indépendamment H ou un alkyle en $C_1$-$C_4$, et $An^-$ représente un anion habituel pour les colorants cationiques

2. Colorants selon la revendication 1, de formule générale

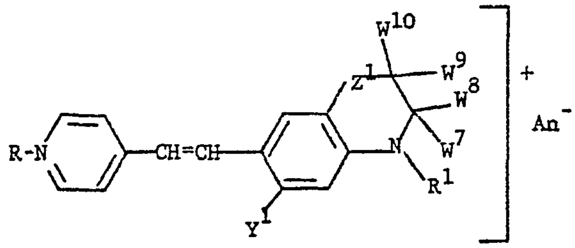

dans lequel

R, $R^1$ et $An^-$ ont la signification de la revendication 1,

$Y^1$ représente H, $CH_3$, $OCH_3$, $OC_2H_5$ ou Cl,

$Z^1$ représente $CH_2$, $CHCH_3$ ou une liaison directe et

$W^7$, $W^8$, $W^9$ et $W^{10}$ représentent indépendamment l'un de l'autre H, $CH_3$ ou $C_2H_5$.

3. Colorants de la formule de la revendication 2, dans lesquels $Z^1$ représente $CH_2$ ou $CHCH_3$.

4. Procédé pour la fabrication de colorants selon la revendication 1, caractérisé en ce que l'on condense des sels quaternaires de formule

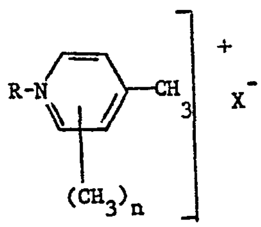

dans laquelle

R et n ont la signification de la revendication 1 et

$X^-$ représente un anion qui peut être différent de l'anion $An^-$ du colorant final,

avec des aldéhydes de formule

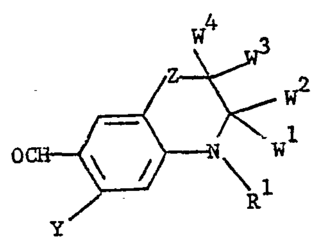

dans laquelle

$R^1$, Y, Z et $W^1$-$W^4$ ont la signification de la revendication 1,

ou leurs dérivés fonctionnels.

5. Procédé selon la revendication 4, caractérisé en ce que l'on effectue la condensation dans un solvant organique à des températures comprises entre 20 et 140 °C.

6. Procédé selon la revendication 5, caractérisé en ce que l'on effectue la condensation en présence d'un catalyseur basique.

7. Application des composés selon les revendications 1 à 3 pour la teinture, l'impression et la coloration en masse d'acrylonitrile, de polyesters et polyamides modifiés par un acide, d'acétate de cellulose, fibres de noix de coco, jute, sisal, soie, laine tannée, cuir, papiers encollés et non encollés, ainsi que pour la préparation de pâtes pour crayons à bille et d'encres à tampons et en flexographie.